# EUROPÄISCHE PATENTSCHRIFT

(11) **EP 0 482 049 B1**
(45) Veröffentlichungstag und Bekanntmachung des Hinweises auf die Patenterteilung: **12.10.1994**
(21) Anmeldenummer: 90910746.8
(22) Anmeldetag: 07.07.1990
(51) Int. Cl.: F16H 47/04, F16H 61/12

(54) **EINRICHTUNG UND VERFAHREN ZUM BETRIEB EINER STUFENLOS VERSTELLBAREN ANTRIEBSEINHEIT EINES KRAFTFAHRZEUGS**
ARRANGEMENT AND PROCESS FOR OPERATING A CONTINUOUSLY VARIABLE DRIVING UNIT OF A MOTOR VEHICLE
DISPOSITIF ET PROCEDE POUR L'UTILISATION D'UNE UNITE DE TRANSMISSION A VARIATION CONTINUE D'UN VEHICULE AUTOMOBILE

(30) Priorität: 14.07.1989 DE 3923218
(43) Veröffentlichungstag der Anmeldung: 29.04.1992
(73) Patentinhaber: ZF FRIEDRICHSHAFEN Aktiengesellschaft, 88038 Friedrichshafen (DE)
(72) Erfinder: NIKOLAUS, Heinrich, D-2000 Hamburg 70 (DE); PATON, Robert, D-8390 Passau (DE)
(86) Internationale Anmeldenummer: EP9001106
(87) Internationale Veröffentlichungsnummer: WO9101461

(56) Entgegenhaltungen:
- EP-A- 0 243 022
- EP-A- 0 314 409
- DE-A- 3 836 421
- DE-C- 3 512 523

## Beschreibung

Die Erfindung betrifft eine Einrichtung und ein Verfahren zum Betrieb einer stufenlos verstellbaren Antriebseinheit eines Kraftfahrzeugs mit den Merkmalen nach dem Oberbegriff des Anspruchs 1 bzw. 6.

Aus der DE-C- 35 12 523 ist ein stufenlos einstellbares, leistungsverzweigendes Verbundlastschaltgetriebe mit Gruppenschaltungen bekannt. Das Getriebe besteht aus zwei Teilgetrieben. Das eine ist ein stufenlos einstellbares, leistungsverzweigendes Koppelgetriebe mit mehreren Wellen. Das andere Teilgetriebe ist ein Schaltgetriebe mit einer Ganggruppe und mehreren Gruppengängen, die auf die Hauptabtriebswelle wirken. Die beiden Koppelwellen treiben alternativ das Schaltgetriebe an. Die Gangschaltungen erfolgen bei Synchrondrehzahlen lastfrei und ohne Zugkraftunterbrechung. Das Getriebe wirkt wie ein stufenloses Getriebe mit großem Stellbereich und erlaubt in einem Fahrzeug das Betreiben der Brennkraftmaschine entlang der Kurve für minimalen Kraftstoffverbrauch und ermöglicht so Kraftstoffeinsparung.

Das stufenlos einstellbare, leistungsverzweigende Koppelgetriebe enthält Verdrängermaschinen, die ein hydrostatisches Getriebe bilden. Soll das Gesamtübersetzungsverhältnis des Getriebes erweitert werden, muß entweder das hydrostatische Getriebe vergrößert oder aber die Anzahl der Gänge im Schaltgetriebe erhöht werden. Erstere Maßnahme führt zu größeren hydrostatischen Leistungsflüssen und damit zu schlechteren Wirkungsgraden und zu mehr Gewicht und Platzbedarf durch größere Verdrängermaschinen. Eine feinere Abstufung des Schaltgetriebes durch eine erhöhte Anzahl von Gängen führt zu einer entsprechend höheren Anzahl von Kupplungen. Die Kupplungen können z. B. lastschaltbare, kraftschlüssige Lamellenkupplungen sein.

Während eines Schaltvorgangs wird die Getriebeausgangswelle mit einer anderen Koppelwelle verbunden. Dieser Schaltvorgang erfolgt bei synchroner Drehzahl der beteiligten Koppelwellen. Die Koppelwellen sind über die Lamellenkupplungen mit der Ausgangswelle des Getriebes verbunden, wobei Überschneidungen in der Kupplungsbetätigung während des Schaltvorganges auftreten, bei welchem ein starres Übersetzungsverhältnis zwischen hydrostatischem und mechanischem Getriebezweig besteht.

Relativdrehzahlen treten zwischen den Lamellen leistungsübertragender Kupplungen weder bei ordnungsgemäßem Betrieb innerhalb eines Schaltbereichs noch während eines ordnungsgemäß verlaufenden Schaltvorgangs auf. Wenn auch Synchrondrehzahl während des Schaltvorgangs nicht immer ganz genau vorliegt, so sind die Drehzahldifferenzen zwischen den Kupplungen doch so gering, daß beinahe keine Reibung beim Zusammenschluß der Kupplungen auftritt.

Die Kupplungen sind so ausgelegt, daß Schlupf von den Kupplungslamellen nur sehr begrenzt ertragen werden kann.

Fehlfunktionen, z. B. Druckabfall am Betätigungskolben einer Kupplung aufgrund von Abnützung, mechanischem Versagen oder fehlendem Druckmittel, können jedoch dazu führen, daß der Schließdruck der Kupplung nicht ausreicht, um das am Getriebe anliegende Drehmoment zu übertragen. Die Kupplung rutscht dann oder wird - bei fehlendem Druckmittelwährend eines Schaltvorgangs nicht mehr zugeschaltet. Rutschen wurde innerhalb von kurzer Zeit, z. B. ca. 2 min, die Kupplungslamellen zerstören.

Ist eine Kupplung nicht zuschaltbar, kann der Antriebsstrang ganz unterbrochen sein.

Fehlfunktionen der Kupplungen führen also zu insgesamt sehr nachteiligen Folgen für den Antrieb eines Kraftfahrzeugs.

Weiter ist aus der EP-A-0 243 022 ein Verfahren zum Steuern eines automatischen Getriebes bekanntgeworden, worin der Kraftstoffverbrauch, die Gangwahl und das Schalten des Getriebes von gemessenen oder errechneten Betriebsparametern, insbesondere abhängig von der Drosselklappenstellung, erfolgen. Die verschiedenen Eingangsparameter werden nach einem Programm bzw. logischen Regeln verarbeitet. Ein Kupplungsbetätiger wird von einer elektronischen Zentraleinheit gesteuert und kann die Hauptkupplung betätigen. Hierbei wird der Status der Kupplung erfaßt. Fehlfunktionen werden hingegen nicht aufgedeckt.

Der Erfindung liegt die Aufgabe zugrunde, eine Einrichtung und ein Verfahren zum Betrieb eines stufenlos verstellbaren, hydrostatisch-mechanischen Leistungsverzweigungsgetriebes zu schaffen, die Fehlfunktionen einer Kupplung aufdeckt, den Fahrer informiert, die Kupplung schützt und die Fahrsicherheit gewährleistet.

Erfindungsgemäß wird dies dadurch erreicht, daß eine Regeleinrichtung mit Sensoren für die Drehzahl einer Eingangswelle des Koppelgetriebes und die Drehzahl der Ausgangswelle des Getriebes verbunden ist, und die Regeleinrichtung in Abhängigkeit vom Verhältnis dieser Drehzahlen eine Warneinrichtung, Lamellenkupplungen und eine Bremse betätigt, eine Pumpe über eine Leitung Druckmittel zu Betätigungseinrichtungen der Lamellenkupplungen fördert und eine Leitung von der Leitung abzweigt und von der Leitung eine Leitung abgeht und die Leitung sich in zwei parallel geschaltete Leitungen aufspaltet, wobei die Leitung ein vom Druck in der Leitung gesteuertes Ventil enthält und die Leitung ein mit einer Regeleinrichtung verbundenes, elektrisch betätigtes Ventil enthält und eine Leitung die Betätigungseinrichtung einer Bremseinrichtung mit den Leitungen verbindet.

Mit der erfindungsgemäßen Einrichtung wird erreicht, daß die Kupplungen mit Sensoren kontrolliert werden, die zur Regelung des Getriebes bereits vorhanden sind. Fehlfunktion einer der Kupplungen wird der Regeleinrichtung signalisiert, wenn die Ausgangswelle des Getriebes eine Drehzahl erreicht, die aufgrund der Übersetzungsverhältnisse im hydrostatischen Leistungszweig und des mechanischen Schaltgetriebes, der Drehzahlen der Ausgangswelle des Hydrostaten und/oder der Brennkraftmaschine nur bei rutschender Kupplung möglich ist. Indem alle Kupplungen sofort geöffnet werden, kann übermäßigem Verschleiß vorgebeugt werden. Der Fahrer wird gewarnt und das Fahrzeug automatisch abgebremst.

Elektronische Regeleinrichtungen weisen ein besonders günstiges Preis-Leistungsverhältnis auf und ermöglichen in besonders vorteilhafter Weise die Kombination der erfindungsgemäßen Regelungsfunktion mit Fahrprogrammen.

Gemäß Anspruch 2 können hydraulisch betätigte Kupplungen die Regelfunktionen mit handelsüblichen Stellgliedern erfüllen.

Gemäß Anspruch 3 ist ein Akkumulator vorgesehen, der bei Druckverlust gewährleistet, daß zur Betätigung der Bremse noch ausreichend Druckmittel zur Verfügung steht.

Gemäß Anspruch 4 wird die einfach zu ermittelnde Drehzahl der Brennkraftmaschine zur Verhältnisbildung herangezogen.

Gemäß Anspruch 5 mißt ein Sensor die Drehzahl der Sekundäreinheit des hydrostatischen Zweigs und übermittelt diese an die Regeleinrichtung, so daß der Schlupf im hydrostatischen Zweig bei der Bewertung der Drehzahlverhältnisse nicht mehr berücksichtigt zu werden braucht.

Im Anspruch 6 wird ein Verfahren vorgeschlagen, mit dem sich Fehlfunktionen einer Kupplung erfassen und anzeigen bzw. schädliche Auswirkungen vermeiden lassen.

Anspruch 8 beschreibt ein Verfahren zur Kontrolle der Funktion der Kupplungen beim Umschalten in einen neuen Fahrbereich mit größerer Übersetzung.

Anspruch 9 beschreibt ein Verfahren zur Kontrolle des Schaltvorgangs, das bei fehlerfreiem Funktionieren der Kupplungen den verspannungsfreien Ausgangszustand wieder herstellt.

Anspruch 10 beschreibt ein Verfahren zur Kontrolle des Schaltvorgangs, das die Belastung im Hydrostaten verringert.

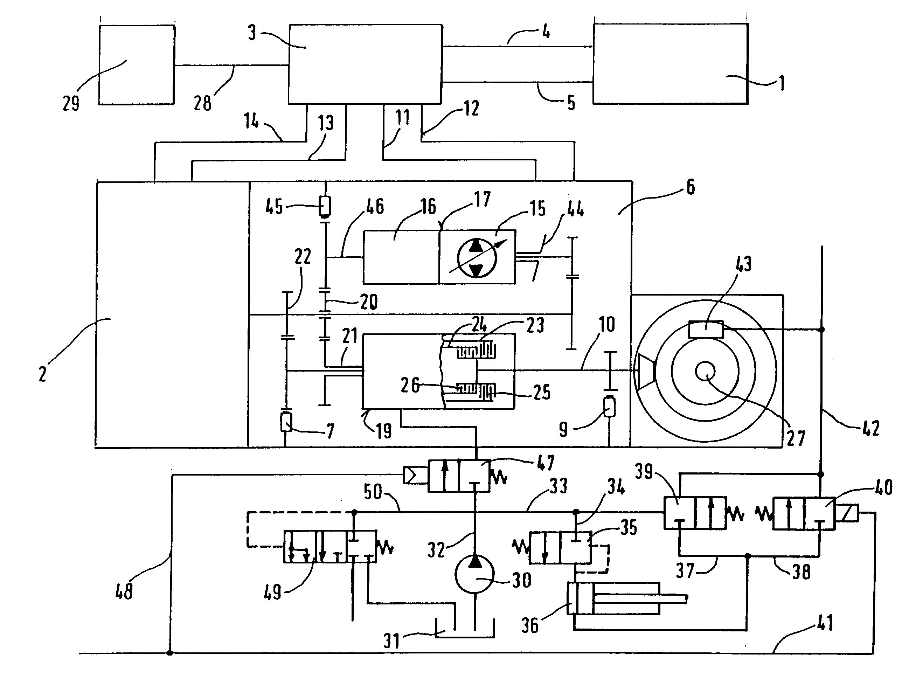

Nachfolgend wird die erfindungsgemäße Einrichtung anhand der Zeichnung am Beispiel eines 2-Bereich-Getriebes näher erläutert.

An einem Fahrschalter 1 wird eine frei wählbare Geschwindigkeit und ein Economy- oder Vollastprogramm zum Betrieb einer Bennkraftmaschine 2 bei Drehzahlen mit Verbrauchsbestwerten oder bei Nenndrehzahl voreingestellt. Eine Regeleinrichtung 3 tauscht über Leitungen 4, 5 elektrische Signale, z. B. Vorgabe und Rückmeldung, mit dem Fahrschalter 1 aus. Eine stufenlos verstellbare Antriebseinheit besteht aus der regelbaren Brennkraftmaschine 2 herkömmlicher Bauart, die ein hydrostatisch mechanisches Leistungsverzweigungsgetriebe 6 antreibt. Zwischen der Brennkraftmaschine 2 und dem Leistungsverzweigungsgetriebe 6 befindet sich keine schaltbare Kupplung. Die z. B. elektronisch ausgebildete Regeleinrichtung 3 kontrolliert automatisch die Drehzahl der Brennkraftmaschine 2 und das Übersetzungsverhältnis des stufenlos verstellbaren hydrostatisch mechanischen Leistungsverzweigungsgetriebes 6, so daß die vorgewählte Geschwindigkeit erreicht wird. Ein Meßwertaufnehmer 7 an einem mit Motordrehzahl angetriebenen Zahnrad 8 am Eingang des mechanischen Getriebezweigs und ein Meßwertaufnehmer 9 an einer Getriebeausgangswelle 10 geben die Wellendrehzahlen über Leitungen 11, 12 an die Regeleinrichtung 3 weiter. Die Regeleinrichtung 3 vergleicht die Drehzahlmeßwerte mit den Vorgaben von Fahrschalter 1. In Abhängigkeit von in der Regeleinrichtung 3 gespeicherten Fahrprogrammen gehen von der Regeleinrichtung 3 Stellsignale über die Leitungen 13, 14 an die Kraftmaschine 2 und an das Leistungsverzweigungsgetriebe 6.

Die Brennkraftmaschine 2 wird in üblicher Weise durch Drosselung des Luftansaugquerschnittes oder der Brennstoffeinspritzmenge geregelt und vorwiegend bei konstanter Drehzahl, z. B. der Drehzahl mit niedrigen Verbrauchswerten, betrieben.

Das Übersetzungsverhältnis des hydrostatisch mechanischen Leistungsverzweigungsgetriebe 6 wird stufenlos verändert, indem die Regeleinrichtung 3 das Fördervolumen einer Primäreinheit 15 und damit die Drehzahl einer Sekundäreinheit 16 eines hydrostatischen Zweiges 17 des Leistungsverzweigungsgetriebe 6 kontinuierlich verstellt. Die Primäreinheit 15 im hydrostatischen Getriebezweig 17 ist über die Eingangswelle 18 von der regelbaren Brennkraftmaschine 2 direkt angetrieben und dreht sich mit einer Drehzahl proportional zur Drehzahl der Brennkraftmaschine 2. Der hydrostatische Getriebezweig 17 ist mit dem mechanischen Getriebezweig 19 über ein Zahnrad 20 und eine Hohlwelle 21 verbunden.

Die Brennkraftmaschine 2 treibt über Zahnräder 22 und 8 den mechanischen Getriebezweig 19 an, der mindestens ein Koppelgetriebe (nicht dargestellt) enthält. Koppelwellen 23, 24 der Koppelgetriebe sind angetrieben mit stufenlos variablen Drehzahlen, die sich aus der Summierung der stufenlos variablen Drehzahlen der Sekundäreinheit 16 und der konstanten Drehzahl der Welle 8 ergeben. Kupplungen 25, 26 verbinden wahlweise eine der Koppelwellen 23 oder 24 mit der Getriebeausgangswelle 10, die eine Hinterachse 27 antreibt. Während eines Schaltvorgangs sind zumindest für eine kurze Zeit beide Koppelwellen 23 und 24 über die Kupplungen 25, 26 mit der Getriebeausgangswelle 10 Gemeinsam verbunden.

Die Regeleinrichtung 3 ist über eine Leitung 28 mit einer akustischen und/oder optischen Warneinrichtung 29 in einer Fahrerkabine (nicht dargestellt) des Kraftfahrzeugs verbunden.

Eine Pumpe 30 fördert aus einem Reservoir 31 Druckmittel durch eine Druckleitung 32 zu hydraulischen Betätigungseinrichtungen (nicht dargestellt) der Kupplungen 25, 26. Von der Druckleitung 32 zweigt eine Druckleitung 33 ab. Von der Druckleitung 33 zweigt eine weitere Druckleitung 34 ab, die ein Rückschlagventil 35 und einen Akkumulator 36 enthält. Die Druckleitung 34 mündet in zwei parallel geschaltete Druckleitungen 37, 38. Die Druckleitung 37 enthält ein federvorgespanntes 3/2-Wegeventil 39, das durch den Druck in der Leitung 33 in geschlossener Stellung gehalten ist. Die Druckleitung 38 enthält ein federvorgespanntes 3/2-Wegeventil 40, das durch die Bordspannung des elektrischen Netzes des Kraftfahrzeugs geschlossen gehalten ist. Die 3/2-Wegeventile 39, 40 sind über eine elektrische Leitung 41 mit der Regeleinrichtung 3 verbunden.

Die Druckleitungen 37, 38 vereinigen sich in einer Druckleitung 42, die in die Betätigungseinrichtung einer Scheibenbremse 43 mündet. Die Scheibenbremse 43 wirkt auf die Hinterachse 27 und kann mit der Betriebsbremse identisch sein.

Die Leitung 32 enthält ein von der Regeleinrichtung 3 über Leitungen 41, 48 elektrisch angesteuertes 3/2-Wegeventil 47. Bei anliegender Bordspannung ist das Ventil 47 geöffnet. Von der Leitung 32 zweigt eine Leitung 50 ab, die zu einem 4/3-Wegeventil 48 führt. Das Ventil 49 ist vom Druck in der Leitung 32 gesteuert und weist Anschlüsse auf zur Schmierung 51 und zum Rücklauf 52.

### Funktionsweise:

### a) Fehlerfreier Betrieb:

Die zugeschaltete Kupplung 25 oder 26 überträgt ohne Schlupf die Drehzahl der zugeschalteten Koppelwelle 23 oder 24 zu 100 % auf die Ausgangswelle 10 des Getriebes 6.

Ein Sensor 7 übermittelt die Drehzahl der Brennkraftmaschine 2 an die Regeleinrichtung 3. In der Regeleinrichtung 3 sind weiterhin die Stellung der Schwenkscheibe 44 der Primäreinheit 15 und das zugeschaltete Übersetzungsverhältnis des mechanischen Getriebes 19 gespeichert. Bei leckagefreiem Betrieb des hydrostatischen Getriebezweigs 17 ließe sich aus diesen Parametern bereits errechnen, welche Drehzahl der Sensor 9 von der Ausgangswelle 10 des Getriebes 6 an die Regeleinrichtung 3 übermitteln sollte. Leckagefreier Betrieb der Hydrostaten 15, 16 ist nur im idealen lastfreien Betrieb möglich. In einer besonders vorteilhaften Ausführung der erfindungsgemäßen Einrichtung ist daher ein Sensor 45 vorgesehen, der die Drehzahl der Ausgangswelle 46 der Sekundäreinheit 16 an die Regeleinrichtung 3 übermittelt. Übersetzungsabweichungen des Getriebes 6 aus Hydrostatverlusten sind in dem Meßwert des Sensors 45 bereits berücksichtigt.

Das Ventil 47 ist geöffnet, und die Pumpe 30 fördert Druckmittel zu den Kolben der Kupplungen 25 bzw. 26 und in die Druckleitung 33 und füllt in der Druckleitung 34 einen Akkumulator 36. Der Druck in der Leitung 33 hält das 3/2-Wegeventil 39 der Leitung 37 geschlossen, solange der Druck in der Leitung 32 ausreicht, um eine der Kupplungen 25, 26 zu schließen.

Der Druck in der Leitung 32 steuert über die Leitungen 50, 50' das 4/3-Wegeventil 49. Bei ausreichendem Druck wird die Schmierung 51 mitversorgt. Bei erhöhtem Druck wird die Verbindung 52 zum Rücklauf frei.

### b) Fehlerhafter Betrieb:

Fällt der Druck in der Leitung 32 unter einen in den 3/2-Wegeventilen 39 durch Federspannung voreingestellten Wert, z. B. aufgrund Pumpenverschleiß oder fehlendem Druckmittel, öffnet das Ventil 39 automatisch, und Druckmittel fließt mit durch den Akkumulator 36 garantiertem Druckniveau durch die Leitungen 37 und 42 und betätigt die Bremse 43, so daß das Fahrzeug langsam zum Stillstand kommt. Das Öffnen des 3/2-Wegeventils 39 wird an die Regeleinrichtung 3 signalisiert, die das Ventil 47 schließt. Die zugeschaltete Kupplung 25, 26 wird druckfrei, und über das Display 29 wird der Fahrer informiert, daß eine Betriebsstörung vorliegt.

Trotz ausreichendem Druck in der Leitung 32 kann aufgrund einer Störung in der Betätigungseinrichtung der Kupplungen 25, 26, z. B. Klemmen eines Kolbens, Schlupf in der zugeschalteten Kupplung 25 oder 26 möglich sein.

Der ständige Vergleich der an der Ausgangswelle 10 des Getriebes mittels des Sensors 9 gemessenen Drehzahl mit der Drehzahl der Brennkraftmaschine 2 und hilfsweise noch der Drehzahl der Ausgangswelle 46 der Sekundäreinheit 16 mit in der Regeleinrichtung 3 vorbekannten Kennfeldern führt zur sofortigen Entdeckung einer rutschenden Kupplung. Die Regeleinrichtung 3 veranlaßt unmittelbar die Ausgabe einer Warnung am Display 29, macht durch Schließen des Ventils 47 alle Betätigungseinrichtungen der Kupplungen 25, 26 druckfrei und gibt ein Steuerungssignal, das 3/2-Wegeventil 40 zu öffnen. Druckmittel fließt von der Leitung 32 durch Leitungen 33, 34, 38, 42 und betätigt die Bremse 43.

### c) Überwachung der Schaltvorgänge:

Von der Regeleinrichtung 3 geht nach Zuschalten der Kupplung eines neuen Übersetzungsverhältnisses, aber vor Lösen der Kupplung des vorigen Übersetzungsverhältnisses, also während die Getriebezweige 17, 19 als eine starre Einheit bei ordnungsgemäß geschlossenen Kupplungen 25, 26 umlaufen sollen, ein Signal zur Verstellung der Schwenkscheibe 44 der Primäreinheit 15 aus. Rutscht eine der beiden Kupplungen 25, 26 oder schaltet überhaupt nicht zu, so ändert sich das Verhältnis der Drehzahlen der Ausgangswelle 10 des Getriebes 6 und einer Eingangswelle 8, 46 des Koppelgetriebes während des Schaltvorgangs aufgrund eines veränderten Winkels der Schwenkscheibe 44 der Primäreinheit 15. Die Regeleinrichtung 3 gibt eine Warnung über das Display 29, setzt alle Kupplungen 25, 26 druckfrei durch Schließen des Ventils 47 und öffnet das 3/2-Wegeventil 40, so daß die Bremse 43 betätigt wird.

Ändert sich das Verhältnis der Drehzahlen während des Schaltvorgangs aufgrund eines veränderten Winkels der Schwenkscheibe 44 der Primäreinheit 15 nicht, stellt die Regeleinrichtung 3 wieder den ursprünglichen Winkel ein und öffnet die Kupplung des vorigen Übersetzungsverhältnisses.

Bei Zusammenbruch der Spannung im elektrischen Netz des Kraftfahrzeugs öffnet das 3/2-Wegenventil 40 ebenfalls, so daß zumindest das Bremsen weiterhin durch den Akkumulator 36 gesichert ist und das Fahrzeug sicher zum Stillstand kommt.

### Bezugszeichen

- 1: Fahrschalter
- 2: Brennkraftmaschine
- 3: Regeleinrichtung
- 4: Leitung
- 5: Leitung
- 6: Getriebe
- 7: Sensor
- 8: Zahnrad
- 9: Sensor
- 10: Ausgangswelle
- 11: Leitung
- 12: Leitung
- 13: Leitung
- 14: Leitung
- 15: Primäreinheit
- 16: Sekundäreinheit
- 17: hydrostatischer Getriebezweig
- 18: Eingangswelle
- 19: mechanischer Getriebezweig
- 20: Zahnrad
- 21: Hohlwelle
- 22: Zahnrad
- 23: Koppelwelle
- 24: Koppelwelle
- 25: Kupplung
- 26: Kupplung
- 27: Hinterachse
- 28: Leitung
- 29: Display/Warneinrichtung
- 30: Pumpe
- 31: Reservoir
- 32: Druckleitung
- 33: Druckleitung
- 34: Druckleitung
- 35: Rückschlagventil
- 36: Akkumulator
- 37: Druckleitung
- 38: Druckleitung
- 39: 3/2-Wegeventil mechanisch
- 40: 3/2-Wegeventil elektrisch
- 41: Steuerungs- bzw. Stromleitung
- 42: Druckleitung
- 43: Bremse
- 44: Schwenkscheibe
- 45: Sensor
- 46: Ausgangswelle Sekundäreinheit
- 47: 3/2-Wegeventil
- 48: elektr. Steuerleitung
- 49: 4/3-Wegeventil
- 50: Druckleitung
- 51: Schmiermittelleitung
- 52: Rücklauf

## Patentansprüche

1. Einrichtung zum Betrieb einer stufenlos verstellbaren Antriebseinheit eines Kraftfahrzeugs mit einer regelbaren Brennkraftmaschine (2) und einem hydrostatisch-mechanischen Leistungsverzweigungsgetriebe (6) mit stufenlos veränderlichem Übersetzungsverhältnis, wobei der mechanische Zweig (19) des hydrostatisch-mechanischen Leistungsverzweigungsgetriebe (6) mehrere Übersetzungsverhältnisse und der hydrostatische Zweig (17) eine Primäreinheit (15) sowie eine Sekundäreinheit (16) mit veränderlicher Drehzahl zur kontinuierlichen Veränderung der Übersetzungsverhältnisse zwischen den Schaltpunkten des mechanischen Zweiges (19) aufweist und jedem Übersetzungsverhältnis im mechanischen Zweig eine Koppelwelle (23, 24) zugeordnet ist, die über eine Schaltkupplung (25, 26) mit der Ausgangswelle (10) des Getriebes (6) verbunden werden kann, dadurch **gekennzeichnet,** daß eine Regeleinrichtung (3) mit Sensoren (7, 45; 9) für die Drehzahl einer Eingangswelle (21) des Koppelgetriebes und die Drehzahl der Ausgangswelle (10) des Getriebes (6) verbunden ist, und die Regeleinrichtung (3) in Abhängigkeit vom Verhältnis dieser Drehzahlen eine Warneinrichtung (29), Lamellenkupplungen (25, 26) und eine Bremse (43) betätigt, eine Pumpe (30) über eine Leitung (32) Druckmittel zu Betätigungseinrichtungen der Lamellenkupplungen (25, 26) fördert und eine Leitung (33) von der Leitung (32) abzweigt und von der Leitung (33) eine Leitung (34) abgeht und die Leitung (34) sich in zwei parallel geschaltete Leitungen (37, 38) aufspaltet, wobei die Leitung (37) ein vom Druck in der Leitung (33) gesteuertes Ventil (39) enthält und die Leitung (38) ein mit einer Regeleinrichtung (3) verbundenes, elektrisch betätigtes Ventil (40) enthält und eine Leitung (42) die Betätigungseinrichtung einer Bremseinrichtung (43) mit den Leitungen (37, 38) verbindet.

2. Einrichtung zum Betrieb einer stufenlos verstellbaren Antriebseinheit eines Kraftfahrzeugs gemäß Anspruch 1, dadurch **gekennzeichnet,** daß hydraulisch betätigte Lamellenkupplungen (25, 26) die Koppelwellen (23, 24) der Ausgangswelle (10) zuschalten.

3. Einrichtung zum Betrieb einer stufenlos verstellbaren Antriebseinheit gemäß Anspruch 1, dadurch **gekennzeichnet,** daß die Leitung (34) einen federbelasteten Speicher (36) für das Druckmittel und ein Rückschlagventil (35) enthält.

4. Einrichtung zum Betrieb einer stufenlos verstellbaren Antriebseinheit gemäß Anspruch 1, dadurch **gekennzeichnet,** daß ein Sensor (7) die Drehzahl der Brennkraftmaschine (2) mißt.

5. Einrichtung zum Betrieb einer stufenlos verstellbaren Antriebseinheit gemäß Anspruch 1, dadurch **gekennzeichnet,** daß ein Sensor (45) die Drehzahl der Ausgangswelle der Sekundäreinheit (16) mißt und diesen Wert an die Regeleinrichtung (3) weitergibt.

6. Verfahren zum Betrieb einer stufenlos verstellbaren Antriebseinheit eines Kraftfahrzeugs mit einer regelbaren Brennkraftmaschine (2) und einem hydrostatisch-mechanischen Leistungsverzweigungsgetriebe (6) mit stufenlos veränderlichem Übersetzungsverhältnis, wobei der mechanische Zweig (19) des hydrostatisch-mechanischen Leistungsverzweigungsgetriebes (6) mehrere Übersetzungsverhältnisse und der hydrostatische Zweig (17) eine Primäreinheit (15) sowie eine Sekundäreinheit (16) mit veränderlicher Drehzahl zur kontinuierlichen Veränderung der Übersetzungsverhältnisse zwischen den Schaltpunkten des mechanischen Zweiges (19) aufweist und jedem Übersetzungsverhältnis im mechanischen Zweig (19) eine Koppelwelle (23, 24) zugeordnet ist, die über eine Schaltkupplung (25, 26) mit der Ausgangswelle (10) des Getriebes (6) verbunden werden kann, dadurch **gekennzeichnet,** daß Sensoren (7, 45; 9) die Drehzahlen mindestens einer Eingangswelle (21) eines Koppelgetriebes und der Ausgangswelle (10) des Getriebes messen und das Verhältnis dieser Drehzahlen in einer elektronischen Regeleinrichtung (3) mit gespeicherten Vorgaben eines Kennfeldes verglichen wird und bei einer Abweichung der Verhältnisse der Drehzahlen von den Vorgaben die Regeleinrichtung (3) ein optisches und/oder akustisches Warnsignal veranlaßt und die vorgegebene Zielgeschwindigkeit in der Regeleinrichtung (3) korrigiert bzw. 0-gesetzt wird und die Regeleinrichtung (3) den Druck in den Zufuhrleitungen (32) der Betätigungseinrichtungen der Kupplungen (25, 26) 0-setzt, die Kupplungen (25, 26) sich öffnen und eine Bremse (43) geschlossen wird.

7. Verfahren zum Betrieb einer stufenlos verstellbaren Antriebseinheit eines Kraftfahrzeugs gemäß Anspruch 6, dadurch **gekennzeichnet,** daß automatisch eine Bremse (43) betätigt wird, wenn der Druck in der Zufuhrleitung (32) unter einen voreingestellten Wert sinkt.

8. Verfahren zum Betrieb einer stufenlos verstellbaren Antriebseinheit eines Kraftfahrzeugs gemäß Anspruch 6, dadurch **gekennzeichnet,** daß während eines Schaltvorgangs eine erste Kupplung (25) die Getriebeausgangswelle (10) mit einer Koppelwelle (23) des bestehenden Übersetzungsverhältnisses verbindet und eine zweite Kupplung (26) die Koppelwelle (24) des folgenden Übersetzungsverhältnisses bei synchroner Drehzahl lastfrei und ohne Zugkraftunterbrechung der Getriebeausgangswelle (10) zuschaltet und von einer Regeleinrichtung (3) nach einem Signal zum Schließen der zweiten Kupplung eine Schwenkscheibe (44) der Primäreinheit (15) verstellt, das Ventil (47) geschlossen und die erste Kupplung (25) geöffnet wird, wenn eine Anderung der Drehzahl der Ausgangswelle (10) des Getriebes (6) gemessen wird.

9. Verfahren zum Betrieb einer stufenlos verstellbaren Antriebseinheit gemäß Anspruch 6, dadurch **gekennzeichnet,** daß die Verstellung der Schwenkscheibe (44) rückgängig gemacht wird, wenn sich die Drehzahl der Ausgangswelle (10) des Getriebes (6) nicht geändert hat.

10. Verfahren zum Betrieb einer stufenlos verstellbaren Antriebseinheit gemäß Anspruch 6, dadurch **gekennzeichnet,** daß die Verstellung der Schwenkscheibe (44) der Primäreinheit (15) zu kleineren Auslenkungen hin erfolgt.

## Claims

1. Arrangement for operating a continuously variable drive unit of a motor vehicle with a variable-power combustion engine (2) and a continuously variable ratio hydrostatic/mechanical powersplit gearbox (6), whereby the mechanical transmission branch (19) of the hydrostatic/mechanical powersplit transmission (6) has several transmission ratios and the hydrostatic transmission branch (17) incorporates a primary unit (15) and a secondary unit (16) with variable speeds for continuously adjusting the transmission ratio between the shift points of the mechanical transmission branch (19), and whereby each transmission ratio of the mechanical transmission branch (19) is assigned a coupling shaft (23, 24) which can be linked to the output shaft (10) of the transmission (6) through a clutch (25, 26), **characterized** in that,
a control device (3) is connected to sensors (7, 45; 9) which monitor the speed of an input shaft (21) on the coupling gearbox and the speed of the output shaft (10) of the transmission (6), and that the control device (3) operates a warning mechanism (29), multi-disc clutches (25, 26) and a brake (43) as a function of the speed ratio, whereby a pump (30) delivers pressurized fluid through a line (32) to the actuation elements of the multi-disc clutches (25, 26), line (33) branches off line (32), line (34) branches off line (33), and line (34) splits into two lines (37, 38) connected in parallel, whereby line (37) incorporates a valve (39) which is controlled by the pressure in line (33), and line (38) incorporates an electronically actuated valve (40) which is connected to a control device (3), and a line (42) connects the actuation element of a brake device (43) to lines (37, 38).

2. Arrangement for operating a continuously variable drive unit of a motor vehicle in accordance with Claim 1,
**characterized** in that, hydraulically actuated multi-disc clutches (25, 26) provide a driving link in the coupling shafts (23, 24) of the output shaft (10).

3. Arrangement for operating a continuously variable drive unit in accordance with Claim 1,
**characterized** in that, line (34) contains a spring-loaded accumulator (36) for the pressurized fluid and a non-return valve (35).

4. Arrangement for operating a continuously variable drive unit in accordance with Claim 1,
**characterized** in that, a sensor (7) measures the speed of the combustion engine (2).

5. Arrangement for operating a continuously variable drive unit in accordance with Claim 1,
**characterized** in that, a sensor (45) measures the speed of the output shaft of the secondary unit (16) and passes on this value to the control device (3).

6. Procedure for operating a continuously variable drive unit of a motor vehicle with a variable power combustion engine (2) and a continuously variable ratio hydrostatic/mechanical powersplit gearbox (6), whereby the mechanical transmission branch (19) of the hydrostatic/mechanical powersplit transmission (6) has several transmission ratios and the hydrostatic transmission branch (17) incorporates a primary unit (15) and a secondary unit (16) with variable speeds for continuously adjusting the transmission ratio between the shift points of the mechanical transmission branch (19), and whereby each transmission ratio of the mechanical transmission branch (19) is assigned a coupling shaft (23, 24) which can be linked to the output shaft (10) of the transmission (6) through a clutch (25, 26), **characterized** in that,
sensors (7, 45; 9) measure the speeds of at least one input shaft (21) of a coupling gearbox and of the output shaft (10) of the transmission, and that the relationship between these speeds is compared with a specified characteristic area stored in an electronic control device (3), and given any deviation between the speed relationships and the specifications stored in the control device (3), an optical and/or acoustic warning signal is set off, the specified target speed in the control device (3) is corrected or set to zero, and the control device (3) sets the pressure to zero in the feed lines (32) to the actuation elements of the clutches (25, 26), whereby the clutches (25, 26) separate and a brake (43) is applied.

7. Procedure for operating a continuously variable drive unit of a motor vehicle in accordance with Claim 6,
**characterized** in that, a brake (43) is applied automatically when the pressure in the feed line (32) falls below a specified value.

8. Procedure for operating a continuously variable drive unit of a motor vehicle in accordance with Claim 6,
**characterized** in that, during a gearshift operation, a first clutch (25) connects the transmission output shaft (10) to a coupling shaft (23) for the existing transmission ratio, and a second clutch (26) provides a driving connection in the coupling shaft (24) of the subsequent transmission ratio in a procedure which occurs at a synchronous speed, without load and without interruption in traction to the transmission output shaft (10), and, following a signal to close the second clutch, a control device (3) displaces a swash plate (44) of the primary unit (15), closes the valve (47) and opens the first clutch (25) if a modification in the speed of the output shaft (10) of the transmission (6) is measured.

9. Procedure for operating a continuously variable drive unit in accordance with Claim 6,
**characterized** in that, the displacement of the swash plate (44) is cancelled if the speed of the output shaft (10) of the transmission (6) has not changed.

10. Procedure for operating a continuously variable drive unit in accordance with Claim 6,
**characterized** in that, the displacement of the swash plate (44) of the primary unit (15) leads to minor deflections.

## Revendications

1. Dispositif destiné à la commande d'une unité d'entraînement réglable en continu d'un véhicule à moteur à combustion interne (2) réglable et à transmission hydrostatique-mécanique à dérivation de puissance (6) à rapport de transmission modifiable en continu, sachant que la branche mécanique (19) de la transmission hydrostatique-mécanique à dérivation de puissance (6) présente plusieurs rapports de transmission et que la branche hydrostatique (17) présente une unité primaire (15) ainsi qu'une unité secondaire (16) à régime modifiable pour une modification continue des rapports de transmission entre les points de commutation de la branche mécanique (19) et qu'un arbre de couplage (23, 24) est affecté à chaque rapport de démultiplication dans la branche mécanique, lequel peut être raccordé à l'arbre de sortie (10) de la transmission (6) au moyen d'un embrayage (25, 26),
**caractérisé** en ce qu'un dispositif de réglage (3) est relié à des capteurs (7, 45, 9) pour le régime d'un arbre d'entrée (21) de la boîte de couplage et le régime de l'arbre de sortie (10) de la transmission (6) et qu'en fonction du rapport de ces régimes, le dispositif de réglage (3) actionne un dispositif avertisseur (29), des embrayages à disques (25, 26) et un frein (43), qu'une pompe (30) refoule par une conduite (32) l'agent de pression vers des dispositifs de commande des embrayages à disques (25, 26) et qu'une conduite (33) dérive de la conduite (32) et qu'une conduite (34) dérive de la conduite (33) et et que la conduite (34) se divise en deux conduites (37, 38) installées parallèlement , sachant que la conduite (37) contient une valve (39) commandée par la pression dans la conduite (33) et que la conduite (38) contient une valve (40) à commande électrique, reliée à un dispositif de réglage (3) et qu'une conduite (42) relie le dispositif d'actionnement d'un dispostif de freinage (43) aux conduites (37, 38).

2. Dispositif destiné à la commande d'une unité d'entraînement réglable en continu d'un véhicule selon la revendication 1, **caractérisé** en ce que les embrayages à disques (25, 26) à commande hydraulique enclenchent les arbres de couplage (23, 24) de l'arbre de sortie (10).

3. Dispositif destiné à la commande d'une unité d'entraînement réglable en continu selon la revendication 1, **caractérisé** en ce que la conduite (34) contient un accumulateur (36) commandé par ressort pour l'agent de pression ainsi qu'un clapet anti-retour (35).

4. Dispositif destiné à la commande d'une unité d'entraînement réglable en continu selon la revendication 1 **caractérisé** en ce qu'un capteur (7) mesure le régime du moteur à combustion interne (2).

5. Dispositif destiné à la commande d'une unité d'entraînement réglable en continu selon la revendication 1, **caractérisé** en ce qu'un capteur (45) mesure le régime de l'arbre de sortie de l'unité secondaire (16) et transmet cette valeur au dispositif de réglage (3).

6. Processus de commande d'une unité d'entraînement réglable en continu d'un véhicule à moteur à combustion interne réglable (2) et à transmission hydrostatique-mécanique à dérivation de puissance (6) à rapport de transmission modifiable en continu, sachant que la branche mécanique (19) de la transmission hydrostatique-mécanique à dérivation de puissance (6) présente plusieurs rapports de transmission et que la branche hydrostatique (17) présente une unité primaire (15) ainsi qu'une unité secondaire (16) à régime modifiable pour une modification continue des rapports de transmission entre les points de commutation de la branche mécanique (19) et qu'un arbre de couplage (23, 24) est affecté à chaque rapport de transmission dans la branche mécanique (19), lequel arbre de couplage peut être relié à l'arbre de sortie (10) de la transmission (6) par un embrayage (25, 26), **caractérisé** en ce que des capteurs (7, 45, 9) mesurent les régimes d'au moins un arbre d'entrée (21), d'une boîte de couplage et de l'arbre de sortie (10) de la transmission et que le rapport de ces régimes est comparé dans un dispositif de réglage électronique (3) avec les données prescrites mémorisées d'un diagramme caractéristique et qu'en cas de différence des rapports des régimes avec les valeurs prescrites, le dispositif de réglage (3) émet un signal avertisseur optique et/ou acoustique et la vitesse voulue et prescrite dans le dispositif de réglage (3) est corrigée, voire remise à 0 et que le dispositif de réglage (3) met à 0 la pression dans les conduites d'amenée (32) des dispositifs d'actionnement des embrayages (25, 26), que les embrayages (25,26) s'ouvrent et qu'un frein (43) est fermé.

7. Processus de commande d'une unité d'entraînement réglable en continu d'un véhicule selon la revendication 6,
**caractérisé** en ce qu'un frein (43) est commandé automatiquement lorsque la pression dans la conduite d'amenée (32) descend en dessous d'une valeur pré-réglée.

8. Pocessus de commande d'une unité d'entraînement réglable en continu d'un véhicule selon la revendication 6,
**caractérisé** en ce que pendant une opération de commutation, un premier embrayage (25) relie l'arbre de sortie (10) de la transmission à un arbre de couplage (23) du rapport de transmission existant et qu'un deuxième embrayage (26) enclenche l'arbre de couplage (24) du rapport de transmission suivant à régime synchrone, sans charge et sans interruption de la force de traction de l'arbre de sortie (10) de la boîte de vitesses et, après un signal, règle à partir d'un dispositif de réglage (3) un disque de verrouillage (44) pour fermer le deuxième embrayage de l'unité primaire (15), que la valve (47) est fermée et le premier embrayage (25) est ouvert si une modification du régime de l'arbre de sortie (10) de la transmission (6) a été mesurée.

9. Processus de commande d'une unité d'entraînement réglable en continu selon la revendication 6, **caractérisé** en ce que le réglage du disque de verrouillage (44) peut être annulé si le régime de l'arbre de sortie (10) de la transmission (6) ne s'est pas modifié.

10. Processus de commande d'une unité d'entraînement réglable en continu selon la revendication 6,
**caractérisé** en ce que le réglage du disque de verrouillage (44) de l'unité primaire (15) se fait par déviations plus petites.
